Europäisches Patentamt

European Patent Office

Office européen des brevets

(19)

(11) EP 1 336 910 B1

(12) FASCICULE DE BREVET EUROPEEN

(45) Date de publication et mention
de la délivrance du brevet:
**12.04.2006 Bulletin 2006/15**

(51) Int Cl.:
***G05B 19/05*** (2006.01)

(21) Numéro de dépôt: **03290088.8**

(22) Date de dépôt: **14.01.2003**

(54) **Procédé de commande d'une installation de traitement d'un gaz par adsorption et installation de traitement correspondante**

Verfahren zur Steuerung einer Gasbehandlungsanlage durch Adsorption und entsprechende Anlage

Method for controlling a gas treatment installation by adsorption and corresponding installation

(84) Etats contractants désignés:
**BE DE ES FR IT NL**

(30) Priorité: **13.02.2002 FR 0201767**

(43) Date de publication de la demande:
**20.08.2003 Bulletin 2003/34**

(73) Titulaire: **L'air Liquide, S.A. à Directoire et Conseil de Surveillance pour l'Etude et l'Exploitation des Procédés Georges Claude
75321 Paris Cedex 07 (FR)**

(72) Inventeurs:
• **De-Souza, Guillaume**
  **92130 Issy Les Moulineaux (FR)**
• **Dolle, Pierre-Olivier**
  **75013 Paris (FR)**
• **Engler, Yves**
  **78400 Chatou (FR)**

(74) Mandataire: **Pittis, Olivier et al
L'Air Liquide, S.A.,
Direction de la Propriété Intellectuelle,
75, Quai d'Orsay
75321 Paris Cedex 07 (FR)**

(56) Documents cités:
**EP-A- 0 793 991          DE-A- 4 239 615
US-A- 6 063 161          US-B1- 6 224 651**

EP 1 336 910 B1

**Description**

La présente invention concerne un procédé de commande d'une installation de traitement d'un gaz par adsorption, comportant N unités d'adsorption, N étant supérieur ou égal à deux, fonctionnant suivant un cycle réparti uniformément en au plus N temps de phase et durant une partie duquel au moins une des unités d'adsorption est soumise au flux de sortie d'au moins une des autres unités d'adsorption, dans lequel on utilise au moins un séquenceur de commande qui détermine les étapes de commande des N unités d'adsorption sur un cycle et qui assure en boucle sur lui-même le fonctionnement cyclique de l'installation de traitement et dans lequel, à partir des étapes de commande de l'installation de traitement qui interviennent durant un temps de phase donné du cycle d'une marche de fonctionnement de l'installation, on obtient par extrapolation aux autres temps de phase du cycle le séquenceur de ladite marche de fonctionnement.

Elle concerne également une installation de traitement d'un gaz par adsorption, commandée par un tel procédé.

Un procédé de ce type est décrit dans les documents US-A-6 063 161 et DE-A- 4 239 615. Le document US-B1-6 224 651, au nom de la Demanderesse, décrit par ailleurs un procédé similaire avec isolement périodique des adsorbeurs.

Pour assurer le bon fonctionnement d'une installation de traitement d'un gaz par adsorption pourvue de plusieurs adsorbeurs à marche cyclique, il est connu de recourir à un séquenceur, c'est-à-dire un ensemble ordonné d'opérations de commande des adsorbeurs. Ces séquenceurs s'avèrent particulièrement utiles lorsque l'installation comporte un grand nombre d'adsorbeurs, soumis sélectivement ou simultanément d'une part à des flux extérieurs d'alimentation et de régénération, et d'autre part à des flux provenant des autres adsorbeurs, un séquenceur regroupant de manière structurée des centaines de commandes de manoeuvre de vannes de ces adsorbeurs, en vue d'assurer le fonctionnement cyclique de l'installation.

Par ailleurs, il est de plus en plus demandé aux installations de traitement à adsorbeurs de fonctionner avec un haut niveau de fiabilité et de stabilité. Ainsi, même si un ou plusieurs adsorbeurs se trouvent momentanément hors service en raison d'une opération de maintenance ou d'un incident imprévu, tel qu'une rupture de vanne, il est souhaitable que ces installations continuent de fonctionner en marche exceptionnelle, c'est-à-dire puissent continuer de produire un flux de gaz traité, avec un débit et une pureté sensiblement similaires à ceux du flux de gaz traité en marche normale.

La transition entre la marche normale et une marche exceptionnelle se doit d'être rapide et d'engendrer le moins possible de perturbations du flux sortant de gaz traité, en vue d'assurer la pérennité d'installations aval consommatrices du gaz traité.

La prise en compte de ces diverses marches de fonctionnement par le procédé de commande d'une telle installation s'avère particulièrement complexe, en raison du très grand nombre de cas de figure envisageables. Il faut ainsi prévoir toutes les possibilités d'isolation d'adsorbeurs et de survenue d'un incident de production, sans pour autant allonger les temps de réaction de l'installation.

Le but de la présente invention est de proposer un procédé de commande d'une installation de traitement d'un gaz par adsorption, du type précité, qui permette de réduire fortement le travail de programmation d'une unité de commande reproduisant ce procédé, et d'améliorer les capacités de réaction de l'installation correspondante.

A cet effet, l'invention a pour objet un procédé de commande d'une installation de traitement à N unités d'adsorption du type précisé dans lequel :

- on associe d'abord à chaque temps de phase successif du cycle un paramètre (dit paramètre mobile) d'identification de l'état de fonctionnement de l'unité d'adsorption qui est dans ledit temps de phase ; pour ledit temps de phase donné, on définit ensuite une séquence paramétrée d'étapes de commande de l'installation de traitement durant ledit temps de phase donné, chaque unité d'adsorption commandée par les étapes de ladite séquence étant repérée par le paramètre d'identification de l'état de fonctionnement de ladite unité d'adsorption ; et on génère enfin un séquenceur de commande de l'installation de traitement en faisant correspondre, durant chaque temps de phase du cycle, une unité d'adsorption à chaque paramètre mobile de la séquence paramétrée, de façon à faire suivre la succession des temps de phase du cycle à toutes les unités d'adsorption en fonction ;
- pour N unités d'adsorption en fonction, on génère un séquenceur de commande en marche normale de l'installation de traitement ;
- chaque étape de la séquence paramétrée du séquenceur en marche normale est repérée par un paramètre mobile et un numéro d'étape ;
- avant de définir la séquence paramétrée, on introduit, pour chaque unité d'adsorption temporairement isolée du reste de l'installation, un paramètre fixe d'identification de l'état isolé de ladite unité isolée, et, lorsqu'on génère le séquenceur de commande de l'installation de traitement, on fait correspondre, durant tous les temps de phase du cycle, à le ou chaque paramètre fixe la ou une des unités d'adsorption isolées, générant un séquenceur de commande en marche exceptionnelle de l'installation de traitement ;
- chaque étape de la séquence paramétrée du séquenceur en marche exceptionnelle est repérée par le ou les paramètres fixes, un paramètre mobile et un numéro d'étape ;

- on prévoit au moins une séquence paramétrée de transition entre la séquence paramétrée du séquenceur en marche normale et la séquence paramétrée du séquenceur en marche exceptionnelle de l'installation de traitement;
- chaque étape de la séquence paramétrée de transition est repérée par un paramètre mobile de la séquence du séquenceur en marche normale, le ou les paramètres fixes, un paramètre mobile de la séquence du séquenceur en marche exceptionnelle et un numéro d'étape ;
- pour sensiblement la moitié des adsorbeurs isolés, le séquenceur en marche exceptionnelle est un séquenceur de commande en marche de maintenance de l'installation de traitement ;
- le séquenceur généré est obtenu en bouclant sur elle-même la séquence paramétrée autant de fois que le cycle comporte de temps de phase, et en faisant correspondre, lors de chaque boucle, à chaque paramètre l'unité d'adsorption correspondante ; et
- on fait correspondre à chaque paramètre l'unité d'adsorption correspondante au moyen d'un tableau de correspondance.

L'invention a également pour objet une installation de traitement d'un gaz par adsorption, du type comportant d'une part N unités, N étant supérieur ou égal à 2, qui fonctionnent suivant un cycle réparti uniformément en au plus N temps de phase et durant une partie duquel au moins une des unités d'adsorption est soumise au flux de sortie d'au moins une des autres unités d'adsorption, lesdites N unités d'adsorption étant raccordées à une conduite d'alimentation en gaz à traiter, à une conduite de production en gaz traité, à une conduite de collecte d'un flux gazeux résiduaire, et étant munies de conduites et de vannes de raccordement à la fois des unités d'adsorption entre elles et des unités d'adsorption avec lesdites conduites d'alimentation, de production et de collecte ; et d'autre part une unité de commande de l'installation qui définit au moins un séquenceur de commande des unités d'adsorption assurant le fonctionnement cyclique de l'installation, dans laquelle au moins un séquenceur de l'unité de commande est obtenu par application du procédé de commande tel que défini ci-dessus, et au moins certaines des vannes de raccordement sont repérées par les paramètres de la séquence paramétrée générant ledit au moins un séquenceur de l'unité de commande.

Suivant une caractéristique avantageuse de cette installation, les vannes, repérées par un paramètre de la séquence paramétrée, sont réparties en des ensembles de vannes en fonction de l'usage du gaz qui traverse les vannes d'un même ensemble, et en ce que chacune desdites vannes repérées par un paramètre est également repérée par le numéro de l'ensemble à laquelle appartient la vanne correspondante.

L'invention sera mieux comprise à la lecture de la description qui va suivre, donnée uniquement à titre d'exemple et faite en se référant aux dessins sur lesquels :

- la figure 1 est une vue schématique et partielle d'une installation de traitement d'un gaz par adsorption selon l'invention ;
- la figure 2 est un diagramme du cycle de fonctionnement des adsorbeurs de l'installation de la figure 1 sur laquelle différents états de fonctionnement a, b, ...,j sont représentés ;
- les figures 3I à 3X sont des diagrammes respectivement associés aux adsorbeurs de l'installation de la figure 1 et illustrant un seul et même temps de phase du cycle de la figure 2;
- la figure 4 est un organigramme explicitant une séquence paramétrée de marche normale de l'installation de la figure 1 ;
- la figure 5 est un diagramme analogue à celui de la figure 2, illustrant un cycle de fonctionnement en marche exceptionnelle de l'installation de la figure 1 ;
- la figure 6 est un organigramme explicitant une séquence paramétrée de marche exceptionnelle de l'installation de la figure 1 ; et
- la figure 7 est un organigramme explicitant une séquence de transition entre la marche normale et une marche exceptionnelle de l'installation de la figure 1.

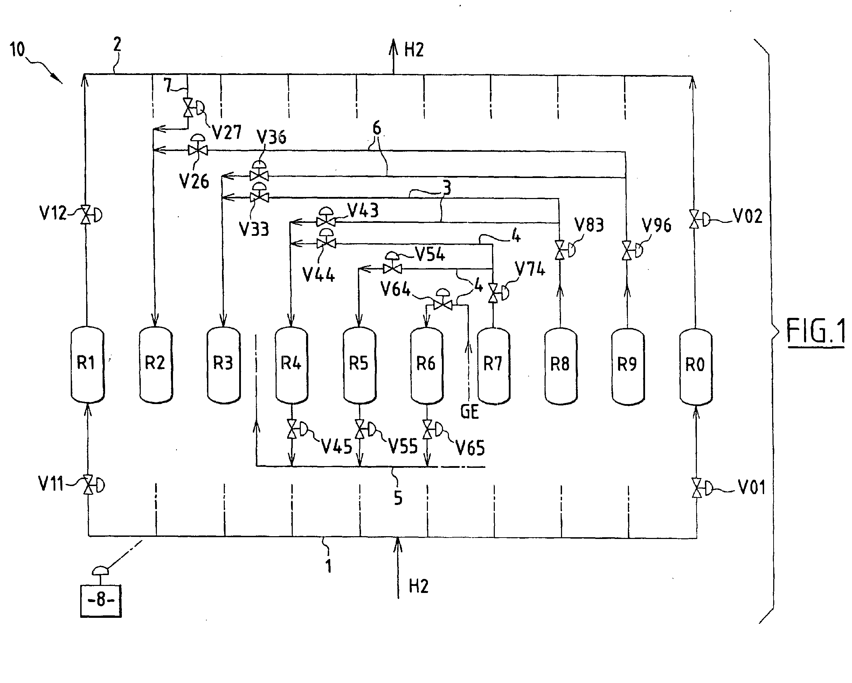

Sur la figure 1 est représentée une installation 10 de traitement d'un flux d'hydrogène impur, destinée à épurer ce flux d'hydrogène d'impuretés qu'il contient, telles que de l'eau, du monoxyde de carbone, de l'azote, du méthane, du dioxyde de carbone, des hydrocarbures, etc...

A cet effet, l'installation 10 comporte une conduite 1 d'alimentation en hydrogène à épurer, une conduite 2 de production d'hydrogène épuré et dix adsorbeurs, référencés respectivement R1, R2, R3,..., R9 et R0. Chaque adsorbeur comporte une bouteille contenant un ou plusieurs matériaux adsorbants à même de retenir tout ou partie des impuretés précitées lorsqu'il sont balayés par le flux d'hydrogène à traiter. Ce ou ces matériaux sont régénérables, c'est-à-dire qu'ils sont capables de restituer des impuretés préalablement adsorbées. A cet effet, l'installation 10 comporte une conduite 5 de collecte du gaz résiduaire chargé d'impuretés désorbées provenant des adsorbeurs qui se régénèrent. L'installation 10 peut comporter également une ligne d'approvisionnement en un gaz d'élution GE, par exemple prélevé sur !a conduite de production 2 ou provenant d'un perméat d'une unité membranaire non-représentée.

L'installation 10 comporte également d'une part des conduites de raccordement, dont la conduite 7, entre les conduites précitées 1, 2 et 5 et les adsorbeurs R1 à R0, et d'autre part, des conduites 3, 4 et 6 de raccordement des adsorbeurs R1 à R0 entre eux, l'une des conduites de raccordement 4 étant raccordée à la ligne d'approvisionnement en gaz d'élution GE. La disposition précise des conduites 3, 4, 6 et 7 apparaîtra plus clairement lors de la description du fonctionnement de l'installation 10. De plus, toutes ces conduites de raccordement sont munies de vannes de régulation du débit de gaz qui les traverse, dont la disposition apparaîtra également lors de la description du fonctionnement de l'installation.

L'installation 10 comporte en outre une unité 8 de commande des adsorbeurs de l'installation. Les détails de programmation et de fonctionnement de cette unité seront développés par la suite.

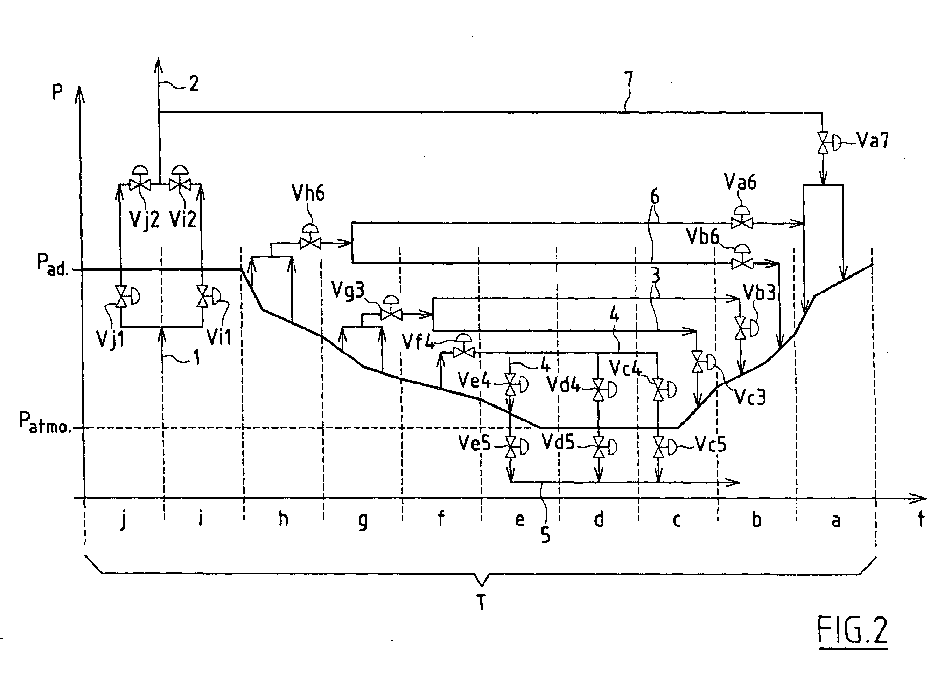

La figure 2 illustre un cycle de fonctionnement de l'installation 10. Sur cette figure, où les temps $t$ sont portés en abscisses et les pressions absolues P en ordonnées, les traits orientés par des flèches indiquent les mouvements et destinations des courants gazeux, et, en outre, le sens de circulation dans respectivement les adsorbeurs R1 à R0 : lorsqu'une flèche est dans le sens des ordonnées croissantes (vers le haut du diagramme), le courant est dit à co-courant dans l'adsorbeur. Si la flèche dirigée vers le haut est située au-dessous du trait indiquant la pression dans l'adsorbeur, le courant pénètre dans l'adsorbeur par l'extrémité d'entrée de cet adsorbeur ; si la flèche dirigée vers le haut est située au-dessus du trait indiquant la pression, le courant sort de l'adsorbeur par l'extrémité de sortie de cet adsorbeur, les extrémités d'entrée et de sortie étant respectivement celles du gaz à traiter et du gaz soutiré en phase de production ; lorsqu'une flèche est dans le sens des ordonnées décroissantes (vers le bas du diagramme), le courant est dit à contre-courant dans l'adsorbeur. Si la flèche dirigée vers le bas est située au-dessous du trait indiquant la pression de l'adsorbeur, le courant sort de l'adsorbeur par l'extrémité d'entrée de l'adsorbeur ; si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase de production.

Chaque adsorbeur R1 à R0 suit le cycle de la figure 2, en étant décalé par rapport à l'adsorbeur le précédant d'une durée appelée "temps de phase" et égale à la durée T du cycle divisée par dix, c'est-à-dire divisée par le nombre d'adsorbeurs en fonction. Le cycle de la figure 2 comporte donc dix temps de phase et illustre la dualité "temps de phase/ adsorbeurs", à savoir qu'à tout instant du fonctionnement de l'installation 10, chaque adsorbeur est dans un temps de phase différent, ce qui revient à dire que l'état du fonctionnement d'un adsorbeur est, à tout instant du fonctionnement de l'installation, déterminé par le temps de phase dans lequel est cet adsorbeur.

Pour comprendre par la suite le procédé de commande mis en oeuvre par l'unité de commande 8, le fonctionnement de l'installation 10 va être d'abord explicité en se contentant de décrire le fonctionnement des adsorbeurs R1 à R0 durant un seul temps de phase, étant entendu que le fonctionnement des adsorbeurs durant le reste du cycle se déduit par répétition en décalant l'ordre des adsorbeurs.

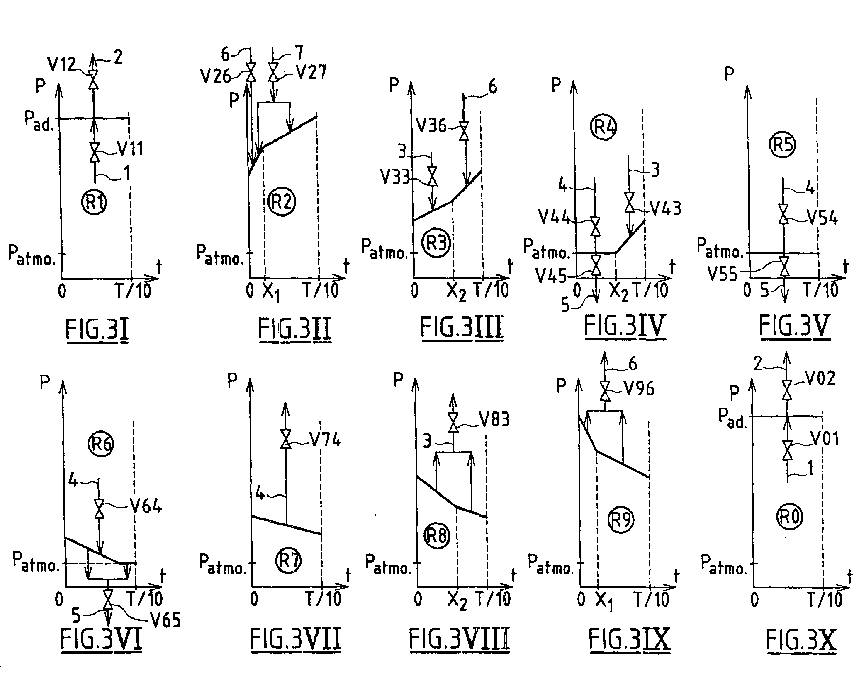

A cet effet, on considère par exemple le temps de phase durant lequel l'adsorbeur R1 est dit "maître", c'est-à-dire qu'il commence sa phase d'adsorption à une haute pression $P_{ad}$, supérieure à la pression atmosphérique $P_{atmo}$, tel qu'illustré sur la figure 3I. De façon concomitante, l'adsorbeur R2 suit le diagramme de la figure 3II, l'adsorbeur R3 suit le diagramme de la figure 3III, et ainsi de suite, jusqu'à l'adsorbeur R0 qui suit le diagramme de la figure 3X.

Pour faciliter la lecture, seules les vannes ouvertes durant au moins une partie de ce temps de phase, repéré par commodité entré les temps $t$=0 et $t$ =T/10, sont représentées sur les figures 1 et 3I à 3X. Par commodité de numérotation, ces vannes seront désignées dans toute la suite par la lettre V suivie de deux caractères X Y selon les conventions suivantes:

- X est le numéro de l'adsorbeur auquel est associée la vanne, et
- Y est le numéro d'un ensemble de vannes ayant la même fonction et associé à une des conduites de l'installation, le numéro 1 étant associé à une fonction "alimentation" de la conduite 1, le numéro 2 étant associé à une fonction "production" de la conduite 2, le numéro 3 étant associé à une fonction "équilibrage inférieur de pression" des conduites de raccordement 3, le numéro 4 étant associé à une fonction "élution" des conduites de raccordement 4, le numéro 5 étant associé à une fonction "évacuation du gaz résiduaire" de la conduite 5, le numéro 6 étant associé à une fonction "équilibrage supérieur de pression" des conduites de raccordement 6, et le numéro 7 étant associé à une fonction "équilibrage final de pression" de la conduite de raccordement 7.

Il est important de noter que l'agencement des vannes de mise en oeuvre du fonctionnement de l'installation 10 est volontairement simplifié, tant par commodité de description que de représentation ; des aménagements particuliers, comportant notamment moins de vannes moyennant des conduites transversales à toute l'installation par exemple, sont à la portée de l'homme de l'art, sans sortir du cadre de l'invention.

Préalablement au début du temps de phase représenté sur les figures 3I à 3X, c'est-à-dire avant l'instant $t$ = 0, les vannes V01, V02, V45 et V55 sont ouvertes durant au moins la fin du temps de phase précédant le temps de phase considéré représenté sur les figures 3I à 3X. Pendant ce dernier, les adsorbeurs R1 et R0 sont en phase d'adsorption, les autres adsorbeurs étant en phase de régénération.

Plus précisément, à l'instant $\underline{t}$ = 0 :

- en plus des vannes V01 et V02, les vannes V11 et V12 sont ouvertes pour assurer la production d'une partie du flux d'hydrogène épuré ;
- les vannes V26, V27 et V96 sont ouvertes pour permettre par au moins une partie des flux issus respectivement des adsorbeurs R1, R9 et R0 de recomprimer l'adsorbeur R2 ;
- les vannes V33 et V83 sont ouvertes pour permettre, par le flux issu de l'adsorbeur R8, de recomprimer l'adsorbeur R3;
- les vannes V64 et V65 sont ouvertes pour permettre d'amener la pression de l'adsorbeur R6 à la pression basse du cycle et pour permettre l'élution du matériau adsorbant de la bouteille R6 ; et
- en plus de la vanne V55, les vannes V54 et V74 sont ouvertes pour permettre l'élution de l'adsorbeur R5 par le flux issu de l'adsorbeur R7.

De plus, de façon sensiblement concomitante à cet instant $\underline{t}$ = 0, les vannes de mise en production de l'adsorbeur R9, qui était en phase d'adsorption durant le temps de phase précédant le temps de phase détaillé sur les figures 3I à 3X, sont fermées.

Puis, à partir de l'instant $\underline{t}$ = $x_1$ où la pression dans l'adsorbeur R2 est sensiblement égale à la pression dans l'adsorbeur R9 :

- les vannes V26 et V96 sont fermées, la recompression ultérieure de l'adsorbeur R2 étant alors plus lente.

Puis, à partir de l'instant $\underline{t}$ = $x_2$ où la pression dans l'adsorbeur R3 est sensiblement égale à la pression dans l'adsorbeur R8 :

- la vanne V33 est fermée et la vanne V43 est ouverte pour permettre de commencer la repressurisation de l'adsorbeur R4 ;
- les vannes V44 et V45 sont fermées, la totalité du flux issu de l'adsorbeur R7 alimentant alors l'adsorbeur R5 ; et
- les vannes V36 et V96 sont ouvertes pour permettre de recomprimer d'avantage l'adsorbeur R3 par le flux issu de R9.

Enfin, à l'instant $\underline{t} = \dfrac{T}{10}$ où la pression dans l'adsorbour R2 est sensiblement égale à la pression dans l'adsorbeur R1, les vannes V27, V96, V83, V74, V33, V43 et V36 sont fermées pour passer du temps de phase décrit jusqu'ici au temps de phase suivant.

Le fonctionnement de l'installation 10 durant les autres temps de phase du cycle se déduit du fonctionnement ci-dessus, en considérant comme maître pendant le temps de phase suivant l'adsorbeur R2, puis l'adsorbeur R3, et ainsi de suite, jusqu'à l'adsorbeur R0.

L'ensemble des opérations de commande des vannes de l'installation, pour les dix temps de phase du cycle, forment ce qu'il est courant d'appeler un séquenceur de commande de l'unité 8, qui est à implémenter, c'est-à-dire à saisir, à la main pour les installations relevant de l'art antérieur.

Le procédé selon l'invention permet d'obtenir le séquenceur de l'unité 8 de manière beaucoup plus fiable et beaucoup plus rapide, comme il va être expliqué ci-dessous.

Pour cela, on introduit des paramètres : on associe à chaque temps de phase successif du cycle, un paramètre d'identification de l'état de fonctionnement de l'adsorbeur qui est dans ce temps de phase.

Ainsi, sur le temps de cycle représenté sur la figure 2, le paramètre d'état $\underline{j}$ est associé au temps de phase dans lequel l'adsorbeur commence sa phase d'adsorption, le paramètre d'état $\underline{i}$ est associé au temps de phase qui suit et dans lequel l'adsorbeur termine sa phase d'adsorption, le paramètre d'état $\underline{h}$ est associé au temps de phase qui suit et dans lequel l'adsorbeur commence sa dépressurisation, et ainsi de suite pour les paramètres $\underline{g}$, $\underline{f}$, $\underline{e}$, $\underline{d}$, $\underline{c}$, $\underline{b}$ et $\underline{a}$. Ces paramètres d'état sont indiqués en abscisses du diagramme de la figure 2. Il est ainsi nécessaire d'introduire autant de paramètres qu'il y a de temps de phase.

De plus, ces paramètres sont dit "mobiles", dans le sens où ils peuvent correspondre à n'importe lequel des dix adsorbeurs, selon le moment considéré du cycle. Ainsi, si à un instant donné le paramètre $\underline{j}$ correspond à l'adsorbeur R1 (j=1), au bout d'une durée valant le cinquième du temps de cycle T (c'est-à-dire valant deux fois la durée d'un temps de phase), ce paramètre $\underline{j}$ correspondra à l'adsorbeur R3 (j=3).

Puis on définit une séquence paramétrée d'étapes de commande de l'installation 10 pendant uniquement un temps de phase donné, chaque adsorbeur n'étant pas repéré par son numéro, mais par le paramètre d'identification de l'état de fonctionnement de cet adsorbeur pendant la période de temps relative au temps de phase choisi. En d'autres termes, cela revient à décrire le fonctionnement de l'installation sur un temps de phase donné, de la même façon qu'il a été décrit en regard des figures 3I à 3X, mais en repérant chaque adsorbeur par un des paramètres variables a, b,..., j, en fonction du temps de phase choisi.

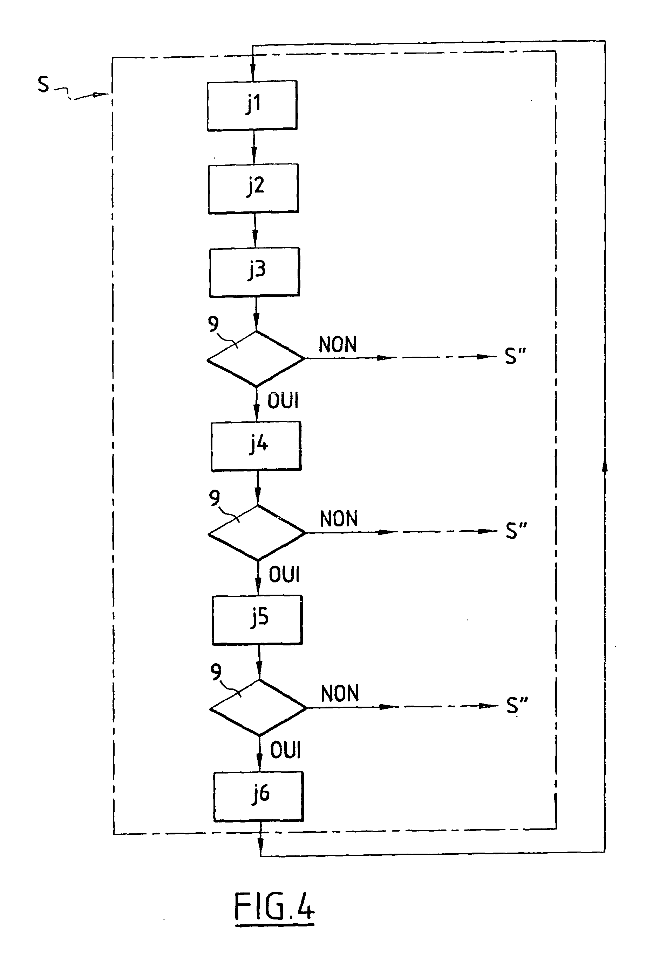

Ainsi, sur la figure 4 est représentée schématiquement cette séquence, notée S. Elle comporte sept étapes repérées j1, j2, ...., j7, ainsi que trois conditions de passage 9. Avantageusement, on note chaque étape de la séquence S par le paramètre j associé au temps de phase "maître" et par un numéro d'étape croissant. Dans la suite, l'adsorbeur correspondant au paramètre "x" sera par commodité d'écriture désigné par Rx.

Plus précisément, l'étape j1 est une étape de mouvement de vannes comportant les instructions d'ouverture des vannes Vj1 et Vj2 permettant le démarrage de la production de l'adsorbeur Rj, de l'ouverture des vannes Ve4 et Ve5 permettant le raccordement de l'adsorbeur Re à la conduite de collecte de gaz résiduaire, et l'ouverture de la vanne Va7 permettant la représsurisation finale de l'adsorbeur Ra.

L'étape j2 est une étape de mouvement de vannes comportant les instructions de fermeture des vannes Vh1 et Vh2 mettant fin à la production de l'adsorbeur Rh, d'ouverture des vannes Vg3 et Vb3 permettant le démarrage de l'équilibrage de pression entre les adsorbeurs Rg et Rb, et d'ouverture des vannes Vf4 et Vd4 permettant l'élution des adsorbeurs Rd et Rc, les vannes Vd5 et Vc5 étant déjà ouvertes.

L'étape j3 est une étape d'attente d'égalisation approximative des pressions de l'adsorbeur Rg et de l'adsorbeur Rh : au début de l'étape j3, les vannes Vh6 et Va6 sont ouvertes permettant le démarrage de l'équilibrage de pression entre ces adsorbeurs Ra et Rh. L'étape j3 se poursuit donc jusqu'à ce que la pression des adsorbeurs Ra et Rh soient sensiblement égales

L'étape j4 est également une étape d'attente d'égalisation approximative des pressions de l'adsorbeur Rb et de l'adsorbeur Rg : au début de l'étape j4, les vannes Vh6 et Va6 sont fermées ; cette étape se prolonge jusqu'à ce que les pressions des adsorbeurs Rb et Rg soient sensiblement égales.

L'étape j5 est une étape d'attente, au début de laquelle :

- l'équilibrage entre les adsorbeurs Rb et Rg étant atteint, la vanne Vb3 est fermée, tandis que la vanne Vc3 est ouverte permettant le début de l'équilibrage entre les adsorbeurs Rg et Rc ;
- les vannes Vh6 et Vb6 sont ouvertes permettant le début de l'équilibrage entre les adsorbeurs Rg et Rc ; et
- les vannes Vc4 et Vc5 sont fermées mettant fin à l'élution de l'adsorbeur Rc.

Cette étape j5 prolonge jusqu'à ce que les pressions des adsorbeurs Rh et Rb soient sensiblement égales, que les pressions des adsorbeurs Rg et Rc soient également sensiblement égales et que la pression de l'adsorbeur Re soit sensiblement égale à la pression basse du cycle.

L'étape j6 est une étape de mouvement de vannes comportant les instructions de fermeture de la vanne Va7, de fermeture des vannes Vh6 et Vb6, l'équilibrage des adsorbeurs Rh et Rb étant terminé, de fermeture des vannes Vg3 et Vc3, l'équilibrage des adsorbeurs Rg et Rc étant terminé, et de fermeture de la vanne Vf4 mettant fin à l'utilisation du flux issu de l'adsorbeur Rf pour l'élution de l'adsorbeur Rd.

Il convient de noter que les instructions de l'étape j6 peuvent être incorporées à l'étape j1, cette dernière comportant alors en outre les instructions de fermeture de vannes Vj7, Vg6, Va6, Vf3, Vb3 et Ve4 non représentées sur la figure 2.

Les conditions de passage 9 des étapes j3 à j4, j4 à j5 et de j5 à j6 sont adaptées pour tester la bonne commutation des vannes commandées à l'étape en cours ou qui les précède. Si toutes ces commutations sont effectuées sans incident, la séquence progresse d'une étape à l'étape suivante, comme indiqué par les flèches de la figure 4. Dans le cas contraire, la séquence S est interrompue et une séquence transitoire S", qui sera détaillée par la suite, est mise en oeuvre.

Le séquenceur de commande en marche normale de l'installation 10 est ensuite obtenu en faisant correspondre à chaque paramètre mobile le numéro d'adsorbeur associé au temps de phase se déroulant effectivement. A cet effet, on peut utiliser le tableau de correspondance suivant, qui se lit de gauche à droite, ligne par ligne:

|  | a | b | c | d | e | f | g | h | i | j |
|---|---|---|---|---|---|---|---|---|---|---|
| 1er temps de phase | R2 | R3 | R4 | R5 | R6 | R7 | R8 | R9 | R0 | R1 |
| 2ème temps de phase | R3 | R4 | R5 | R6 | R7 | R8 | R9 | R0 | R1 | R2 |
| 3ème temps de phase | R4 | R5 | R6 | R7 | R8 | R9 | R0 | R1 | R2 | R3 |
| 4ème temps de phase | R5 | R6 | R7 | R8 | R9 | R0 | R1 | R2 | R3 | R4 |
| 5ème temps de phase | R6 | R7 | R8 | R9 | R0 | R1 | R2 | R3 | R4 | R5 |
| 6ème temps de phase | R7 | R8 | R9 | R0 | R1 | R2 | R3 | R4 | R5 | R6 |
| 7ème temps de phase | R8 | R9 | R0 | R1 | R2 | R3 | R4 | R5 | R6 | R7 |
| 8ème temps de phase | R9 | R0 | R1 | R2 | R3 | R4 | R5 | R6 | R7 | R8 |
| 9ème temps de phase | R0 | R1 | R2 | R3 | R4 | R5 | R6 | R7 | R8 | R9 |
| 10ème temps de phase | R1 | R2 | R3 | R4 | R5 | R6 | R7 | R8 | R9 | R0 |

Arbitrairement le premier temps de phase indiqué dans ce tableau est celui où l'adsorbeur R1 est maître, c'est-à-dire que, durant ce premier temps de phase, j est à remplacer par 1, de même que a est à remplacer par 2, b par 3, etc, jusqu'à remplacer i par 0. On déroule les étapes j1 à j7 de la séquence S en faisant correspondre à chaque paramètre son numéro d'adsorbeur correspondant selon la première ligne du tableau de correspondance : on dispose alors de l'ensemble des étapes de commande décrites précédemment en regard des figures 3I à 3X. Puis on déroule de nouveau cette séquence S en faisant correspondre à chaque paramètre son numéro d'adsorbeur selon la deuxième ligne du tableau, et ainsi de suite jusqu'à la dixième ligne.

De cette façon, sur la durée T d'un cycle, chacun des adsorbeurs R1 à R0 suit la succession des dix temps de phase du cycle, assurant le fonctionnement cyclique de l'installation 10.

Ainsi, l'obtention du séquenceur en marche normale de l'unité de commande 8 par le procédé selon l'invention ne nécessite l'implémentation des étapes de commande des adsorbeurs que pour une seule séquence, c'est-à-dire pour un seul temps de phase du cycle, contrairement au séquenceur évoqué plus haut des installations relevant de l'art antérieur pour lesquelles il est nécessaire d'implémenter l'ensemble des étapes de commande des adsorbeurs sur le cycle entier. En d'autres termes, le procédé selon l'invention permet d'obtenir le séquenceur en marche normale par extrapolation à partir des étapes de commande qui interviennent durant un seul temps de phase du cycle. Le temps de travail d'implémentation du séquenceur s'en trouve grandement réduit, à savoir d'un facteur 10 pour une installation comportant dix adsorbeurs en fonction.

De plus, la définition d'une unique séquence paramétrée limite les risques d'erreurs dans le séquenceur de l'unité de commande 8. En effet, il convient de s'assurer que la séquence S paramétrée ne comporte aucune erreur, pour s'assurer que l'ensemble des étapes du séquenceur obtenu pour cycle n'en comporte également aucune. La fiabilité de fonctionnement de l'installation selon l'invention s'en trouve donc améliorée.

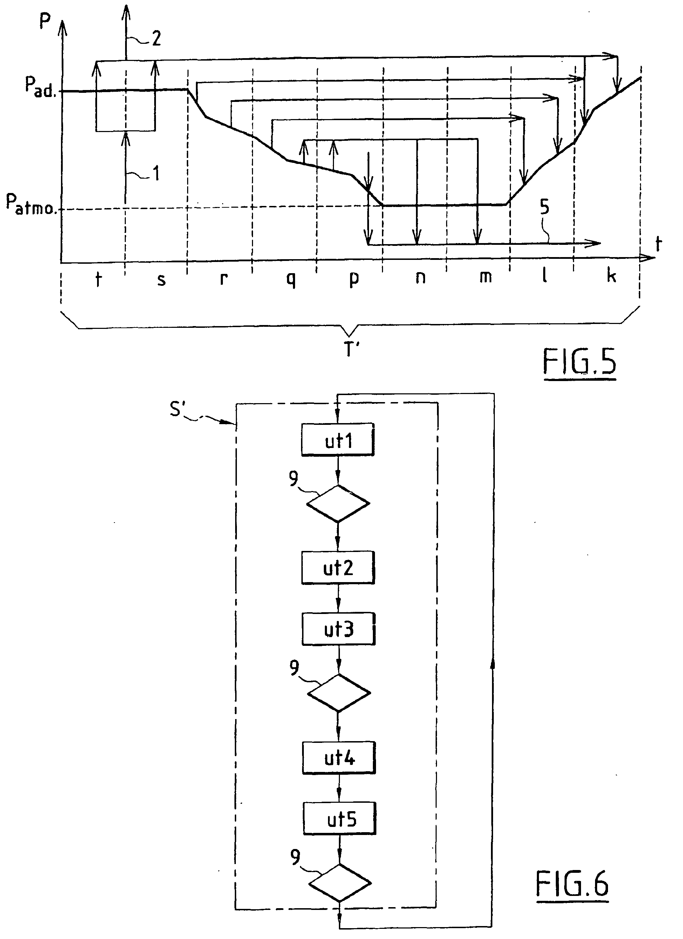

Par ailleurs, le procédé de commande selon l'invention peut avantageusement être appliqué au cas de fonctionnement en marche exceptionnelle de l'installation de la figure 1. Dans l'hypothèse où par exemple l'un des dix adsorbeurs de l'installation 10 est isolé, par exemple l'adsorbeur R3, par exemple pour des raisons de maintenance ou d'incidents mécaniques, l'installation 10 ne fonctionne plus qu'avec neuf adsorbeurs. Son unité de commande 8 doit alors imposer à l'installation de suivre une marche dite exceptionnelle. Le cycle de l'installation est alors, par exemple, celui représenté schématiquement sur la figure 5.

A cet effet, pour obtenir un séquenceur en marche exceptionnelle, le procédé selon l'invention prévoit d'introduire un paramètre d'identification de l'état isolé d'un adsorbeur. Ce paramètre est dit "fixe", dans le sens où il ne peut correspondre dans le temps qu'à un seul adsorbeur, celui qui est isolé. Dans la suite, ce paramètre sera noté u.

De la même façon que précédemment, on associe à chacun des temps de phase du cycle de marche exceptionnelle un paramètre mobile d'identification d'un état de fonctionnement de l'adsorbeur qui est dans ce temps de phase. Pour l'installation 10 à neuf adsorbeurs en fonction, le cycle de marche est de durée T', de valeur différente de la durée T du cycle en marche normale de la figure 2, et comporte neuf temps de phase, les neufs paramètres associés, indiqués en abscisses sur la figure 5, étant par la suite notés k, l, m, n, p, q, r, s et t.

On définit ensuite une séquence S' de marche exceptionnelle pour un seul temps de phase donné, de la même façon qu'explicité précédemment pour la séquence S. On définit la séquence S' de la figure 5, comportant, par exemple, cinq étapes. Avantageusement, ces cinq étapes sont notées respectivement ut1, ut2, ut3, ut4 et ut5, en prenant comme convention de notation que le premier caractère de l'intitulé de l'étape est le paramètre fixe d'état isolé, le deuxième caractère est le paramètre mobile d'état "maître" et le troisième caractère est un numéro d'étape croissant.

Puis, durant chaque temps de phase du cycle, on fait correspondre à chaque paramètre l'adsorbeur associé du temps de phase considéré, générant ainsi au bout de neuf séquences successives le séquenceur de marche exceptionnelle. A cet effet, sont prévus dix tableaux de correspondance possibles selon l'adsorbeur réellement isolé. Dans le cas de l'adsorbeur R3 isolé, ce tableau de correspondance est le suivant :

|  | k | l | m | n | p | q | r | s | t | u |
|---|---|---|---|---|---|---|---|---|---|---|
| 1$^{er}$ temps de phase | R5 | R6 | R7 | R8 | R9 | R0 | R1 | R2 | R4 | R3 |
| 2$^{ème}$ temps de phase | R6 | R7 | R8 | R9 | R0 | R1 | R2 | R4 | R5 | R3 |
| 3$^{ème}$ temps de phase | R7 | R8 | R9 | R0 | R1 | R2 | R4 | R5 | R6 | R3 |
| 4$^{ème}$ temps de phase | R8 | R9 | R0 | R1 | R2 | R4 | R5 | R6 | R7 | R3 |
| 5$^{ème}$ temps de phase | R9 | R0 | R1 | R2 | R4 | R5 | R6 | R7 | R8 | R3 |
| 6$^{ème}$ temps de phase | R0 | R1 | R2 | R4 | R5 | R6 | R7 | R8 | R9 | R3 |
| 7$^{ème}$ temps de phase | R1 | R2 | R4 | R5 | R6 | R7 | R8 | R9 | R0 | R3 |
| 8$^{ème}$ temps de phase | R2 | R4 | R5 | R6 | R7 | R8 | R9 | R0 | R1 | R3 |
| 9$^{ème}$ temps de phase | R4 | R5 | R6 | R7 | R8 | R9 | R0 | R1 | R2 | R3 |

Ce tableau se lit de la même façon que le tableau de correspondance associé à la marche normale de l'installation. On notera que le paramètre $\underline{u}$ correspond toujours à l'adsorbeur R3, pour tous les temps de phase du cycle.

Le procédé de commande selon l'invention permet ainsi d'obtenir un séquenceur de commande en marche exceptionnelle de l'installation 10, en n'implémentant que les étapes relatives à un seul temps de phase du cycle, contrairement aux séquenceurs de l'art antérieur pour lesquels il est nécessaire d'implémenter à la main l'intégralité des étapes de commande du cycle entier, et cela pour les dix marches exceptionnelles envisageables.

Avec l'exemple d'une séquence S' à cinq étapes, le procédé selon l'invention ne nécessite la définition que de cinq étapes de commande des neufs adsorbeurs en fonction pour les dix marches exceptionnelles envisageables, contrairement aux quelque 450 étapes nécessaires pour un séquenceur d'une installation de l'art antérieur.

De plus, la notation des étapes de commande en marche exceptionnelle permet de connaître l'adsorbeur isolé par l'unité de commande 8 dans le cas où cette isolation résulte d'une initiative automatisée de cette unité de commande, par exemple en réponse à la détection automatique d'une panne.

A titre de variante, il est envisageable de prévoir le cas où deux adsorbeurs sont isolés, l'installation 10 ne fonctionnant plus que sur huit adsorbeurs. Il convient alors d'introduire deux paramètres fixes d'indentification des états isolés de ces adsorbeurs.

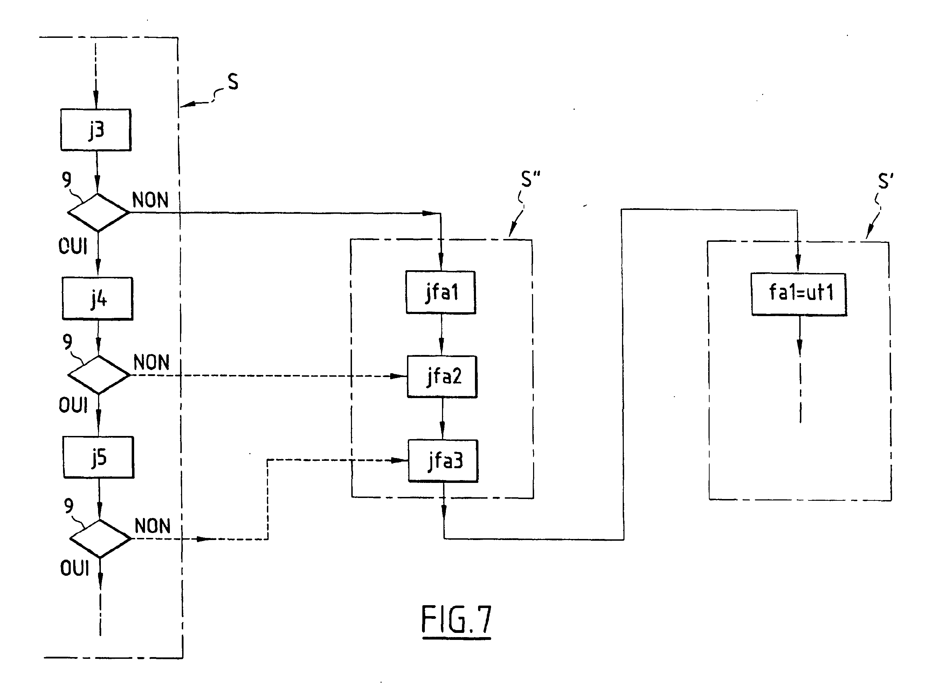

Par ailleurs, en vue d'assurer de meilleures fiabilité et réactivité de l'unité de commande 8 de l'installation 10, il est souhaitable d'introduire des séquences de transition entre la marche normale et une marche exceptionnelle, telles que la séquence de transition S" représentée sur la figure 7.

Cette séquence S" comporte par exemple trois étapes, préalablement implémentées dans l'unité de commande 8 et permettant de passer de l'étape j3 de la séquence S de marche normale à l'étape ut1 de la séquence S' de marche exceptionnelle.

Bien que non représentées, d'autres séquences de transition peuvent également être prévues pour chacune des conditions de passage 9 de la séquence S, ou bien pour seulement certaines des conditions de passage, une même séquence de transition pouvant être utilisée, au moins pour certaines des étapes de cette séquence, pour plusieurs de ces conditions de passage 9. Ainsi, sur la figure 7 est représentée en pointillés la transition de l'étape j5 de la séquence S à l'étape ut1 de la séquence S' en ne passant que par l'étape jfa3 de la séquence S" représentée.

Le procédé selon l'invention permet donc de n'implémenter que la ou les séquences de transition relatives au passage d'un seul temps de phase du cycle de marche normale vers un seul temps de phase du cycle de marche exceptionnelle de l'installation. Pour l'exemple de la séquence paramétrée S de la figure 4, il n'est nécessaire que de définir au plus quatre séquences de transition.

Avantageusement, la notation de chaque étape de commande de la séquence de transition S" respecte la convention suivant laquelle :

- le premier caractère est le paramètre mobile correspondant à l'adsorbeur maître au moment du déclenchement de la transition ;
- le deuxième caractère est le paramètre fixe correspondant à l'adsorbeur isolé, ce paramètre étant mobile avant le déclenchement de la transition ;
- le troisième caractère correspond au paramètre mobile correspondant à l'adsorbeur qui sera maître au démarrage de la marche exceptionnelle S' ; et
- le quatrième caractère est un numéro d'étape croissant.

De cette façon, le paramètrage des séquences S, S' et S" de l'unité de commande 8 permet de toujours savoir par le seul intitulé d'étape de commande en cours dans quel état de fonctionnement se trouve l'installation de traitement 10, y compris en marche transitoire, puisque cette numérotation permet de savoir "d'où l'on vient et où l'on va".

En variante non représentée au procédé, il est envisageable que la moitié des adsorbeurs soient isolés (pour une installation à N adsorbeurs, N impair, cela revient à isoler $\dfrac{N+1}{2}$ adsorbeurs), en particulier lors d'opérations de maintenance générale de l'installation de traitement. Dans ce cas, le séquenceur en marche exceptionnelle est un séquenceur dit de "maintenance".

Bien entendu, le procédé selon l'invention s'applique à une installation de traitement comportant plusieurs unités d'adsorption, ces unités comportant un (cas de l'installation 10 de la figure 1) ou plusieurs adsorbeurs, chaque unité d'adsorption étant commandée en la considérant comme un adsorbeur.

**Revendications**

1. Procédé de commande d'une installation de traitement d'un gaz par adsorption, comportant N unités d'adsorption (R1 à R0), N étant supérieur ou égal à deux, fonctionnant suivant un cycle réparti uniformément en au plus N temps de phase et durant une partie duquel au moins une des unités d'adsorption est soumise au flux de sortie d'au moins une des autres unités d'adsorption, dans lequel on utilise au moins un séquenceur de commande qui détermine les étapes de commande des N unités d'adsorption (R1 à R0) sur un cycle et qui assure en boucle sur lui-même le fonctionnement cyclique de l'installation de traitement (10), et dans lequel, à partir des étapes de commande de l'installation de traitement (10) qui interviennent durant un temps de phase donné du cycle d'une marche de fonctionnement de l'installation, on obtient par extrapolation aux autres temps de phase du cycle le séquenceur de ladite marche de fonctionnement, **caractérisé en ce que** :

   - on associe d'abord à chaque temps de phase successif du cycle un paramètre mobile ($\underline{a},\underline{b}$..., $\underline{j}$) d'identification de l'état de fonctionnement de l'unité d'adsorption (R1à R0) qui est dans ledit temps de phase ;
   - pour ledit temps de phase donné, on définit ensuite une séquence paramétrée (S, S') d'étapes de commande de l'installation de traitement (10) durant ledit temps de phase donné, chaque unité d'adsorption (R1 à R0) commandée par les étapes de ladite séquence étant repérée par le paramètre ($\underline{a}$, $\underline{b}$, ..., $\underline{j}$) d'identification de l'état de fonctionnement de ladite unité d'adsorption ; et
   - on génère enfin un séquenceur de commande de l'installation de traitement (10) en faisant correspondre, durant chaque temps de phase du cycle, une unité d'adsorption (R1 à R0) à chaque paramètre mobile ($\underline{a}$, $\underline{b}$,..., $\underline{j}$) de la séquence paramétrée, de façon à faire suivre la succession des temps de phase du cycle à toutes les unités d'adsorption en fonction.

2. Procédé selon la revendication 1, **caractérisé en ce que**, pour N unités d'adsorption en fonction, on génère un séquenceur de commande en marche normale de l'installation de traitement (10).

3. Procédé selon la revendication 2, **caractérisé en ce que** chaque étape de la séquence paramétrée (S) du séquenceur en marche normale est repérée par un paramètre mobile ($\underline{j}$) et un numéro d'étape.

4. Procédé selon l'une quelconque des revendications précédentes, **caractérisé en ce que**, avant de définir la séquence paramétrée (S'), on introduit, pour chaque unité d'adsorption temporairement isolée du reste de l'installation (R3), un paramètre fixe ($\underline{u}$) d'identification de l'état isolé de ladite unité isolée (R3), et **en ce que**, lorsqu'on génère le séquenceur de commande de l'installation de traitement (10), on fait correspondre, durant tous les temps de phase du cycle, à le ou chaque paramètre fixe ($\underline{u}$) la ou une des unités d'adsorption isolées (R3), générant un séquenceur de commande en marche exceptionnelle de l'installation de traitement (10).

5. Procédé selon la revendication 4, **caractérisé en ce que** chaque étape de la séquence paramétrée (S') du séquenceur en marche exceptionnelle est repérée par le ou les paramètres fixes ($\underline{u}$), un paramètre mobile ($\underline{t}$) et un numéro d'étape.

6. Procédé selon les revendications 2 et 4 prises ensembles, **caractérisé en ce qu'**on prévoit au moins une séquence paramétrée (S") de transition entre la séquence paramétrée (S) du séquenceur en marche normale et la séquence paramétrée (S') du séquenceur en marche exceptionnelle de l'installation de traitement (10).

**7.** Procédé selon la revendication 6, **caractérisé en ce que** chaque étape de la séquence paramétrée de transition (S") est repérée par un paramètre mobile ($\underline{j}$) de la séquence (S) du séquenceur en marche normale, le ou les paramètres fixes ($\underline{u}$), un paramètre mobile ($\underline{t}$) de la séquence (S') du séquenceur en marche exceptionnelle et un numéro d'étape.

**8.** Procédé selon l'une quelconque des revendications 4 à 7, **caractérisé en ce que**, pour sensiblement la moitié des adsorbeurs isolés, le séquenceur en marche exceptionnelle est un séquenceur de commande en marche de maintenance de l'installation de traitement (10).

**9.** Procédé selon l'une quelconque des revendications précédentes, **caractérisé en ce que** le séquenceur généré est obtenu en bouclant sur elle-même la séquence paramétrée (S, S') autant de fois que le cycle comporte de temps de phase, et en faisant correspondre, lors de chaque boucle, à chaque paramètre l'unité d'adsorption correspondante (R1 à R0).

**10.** Procédé selon la revendication 9, **caractérisé en ce qu'**on fait correspondre à chaque paramètre ($\underline{a}$, $\underline{b}$,..., $\underline{j}$; $\underline{k}$, $\underline{l}$,..., $\underline{t}$, $\underline{u}$) l'unité d'adsorption correspondante (R1 à R0) au moyen d'un tableau de correspondance.

**11.** Installation de traitement d'un gaz par adsorption, comportant d'une part N unités d'adsorption (R1 à R0), N étant supérieur ou égal à 2, qui fonctionnent suivant un cycle réparti uniformément en au plus N temps de phase et durant une partie duquel au moins une des unités d'adsorption (R1 à R0) est soumise au flux de sortie d'au moins une des autres unités d'adsorption, lesdites N unités d'adsorption (R1 à R0) étant raccordées à une conduite (1) d'alimentation en gaz à traiter, à une conduite (2) de production en gaz traité, à une conduite (5) de collecte d'un flux gazeux résiduaire, et étant munies de conduites et de vannes de raccordement à la fois des unités d'adsorption entre elles et des unités d'adsorption avec lesdites conduites d'alimentation, de production et de collecte ; et d'autre part une unité (8) de commande de l'installation (10) qui définit au moins un séquenceur de commande des unités d'adsorption (R1 à R0) assurant le fonctionnement cyclique de l'installation (10), **caractérisée en ce qu'**au moins un séquenceur de l'unité de commande (8) est obtenu par application du procédé de commande selon l'une quelconque des revendications 1 à 10, et au moins certaines des vannes de raccordement sont respectivement repérées par un paramètre de la séquence paramétrée (S, S') générant ledit au moins un séquenceur de l'unité de commande (8).

**12.** Installation selon la revendication 11, **caractérisée en ce que** les vannes, repérées par un paramètre de la séquence paramétrée (S, S'), sont réparties en des ensembles de vannes en fonction de l'usage du gaz qui traverse les vannes d'un même ensemble, et **en ce que** chacune desdites vannes repérées par un paramètre est également repérée par le numéro de l'ensemble à laquelle appartient la vanne correspondante.

**Patentansprüche**

**1.** Verfahren zur Steuerung einer Anlage zur Behandlung eines Gases durch Adsorption, die N Adsorptionseinheiten (R1 bis R0) umfasst, wobei N größer oder gleich zwei ist, die gemäß einem Zyklus arbeiten, der gleichmäßig in höchstens N Phasenzeiten unterteilt ist und bei dem während eines Teils desselben mindestens eine der Adsorptionseinheiten dem Abfluss von mindestens einer der anderen Adsorptionseinheiten ausgesetzt wird, in dem mindestens ein Steuerungssequenzer verwendet wird, der die Steuerstufen der N Adsorptionseinheiten (R1 bis R0) in einem Zyklus festlegt und der in einer Schleife auf sich selbst den zyklischen Betrieb der Behandlungsanlage (10) sicherstellt, und in dem mittels Steuerstufen der Behandlungsanlage (10), die während einer gegebenen Phasenzeit eines Zyklus eines Betriebsmodus der Anlage erfolgen, durch Extrapolation zu den anderen Phasenzeiten des Zyklus der Sequenzer des Betriebsablaufs erhalten wird, **dadurch gekennzeichnet, dass**:

- zunächst mit jeder aufeinander folgenden Phasenzeit des Zyklus ein beweglicher Parameter ($\underline{a}$, $\underline{b}$, ..., $\underline{j}$) zur Identifizierung des Betriebszustands der Adsorptionseinheit (R1 bis R0) assoziiert wird, der innerhalb der Phasenzeit liegt;
- anschließend für die gegebene Phasenzeit eine parametrisierte Sequenz (S, S') von Steuerstufen der Behandlungsanlage (10) während der gegebenen Phasenzeit definiert wird, wobei jede Adsorptionseinheit (R1 bis R0) die durch die Stufen der Sequenz gesteuert wird, durch den Parameter ($\underline{a}$, $\underline{b}$, ..., $\underline{j}$) zur Identifizierung des Betriebszustands der Adsorptionseinheit bezeichnet wird; und
- schließlich ein Steuerungssequenzer der Behandlungsanlage (10) erzeugt wird, indem während jeder Phasenzeit des Zyklus eine Adsorptionseinheit (R1 bis R0) jedem beweglichen Parameter ($\underline{a}$, $\underline{b}$, ..., $\underline{j}$) der parametrisierten Sequenz angeglichen wird, so dass bewirkt wird, dass die Reihe von Phasenzeiten des Zyklus in allen im Betrieb befindlichen Adsorptionseinheiten befolgt wird.

2. Verfahren nach Anspruch 1, **dadurch gekennzeichnet, dass** für N im Betrieb befindliche Adsorptionseinheiten ein Normalmodus-Steuerungssequenzer der Behandlungsanlage (10) erzeugt wird.

3. Verfahren nach Anspruch 2, **dadurch gekennzeichnet, dass** jede Stufe der parametrisierten Sequenz (S) des Normalmodus-Sequenzers durch einen beweglichen Parameter ($\underline{j}$) und eine Stufennummer bezeichnet wird.

4. Verfahren nach einem der vorhergehenden Ansprüche, **dadurch gekennzeichnet, dass** vor dem Definieren der parametrisierten Sequenz (S') für jede Adsorptionseinheit, die vorübergehend von dem Rest der Anlage isoliert ist (R3), ein feststehender Parameter ($\underline{u}$) zur Identifizierung des isolierten Zustands der isolierten Einheit (R3) eingeführt wird und dass, wenn der Steuerungssequenzer der Behandlungsanlage (10) erzeugt wird, während aller Phasenzeiten des Zyklus die oder eine der isolierten Adsorptionseinheiten (R3) dem oder jedem feststehenden Parameter ($\underline{u}$) angeglichen wird, wodurch ein Ausnahmemodus-Steuerungssequenzer der Behandlungsanlage (10) erzeugt wird.

5. Verfahren nach Anspruch 4, **dadurch gekennzeichnet, dass** jede Stufe der parametrisierten Sequenz (S') des Ausnahmemodus-Sequenzers durch den oder die feststehenden Parameter ($\underline{u}$), einen beweglichen Parameter ($\underline{t}$) und eine Stufennummer bezeichnet wird.

6. Verfahren nach den zusammengenommenen Ansprüchen 2 und 4, **dadurch gekennzeichnet, dass** mindestens eine parametrisierte Sequenz (S") für den Übergang zwischen der parametrisierten Sequenz (S) des Normalmodus-Sequenzers und der parametrisierten Sequenz (S') des Ausnahmemodus-Sequenzers der Behandlungsanlage (10) vorgesehen wird.

7. Verfahren nach Anspruch 6, **dadurch gekennzeichnet, dass** jede Stufe der parametrisierten Übergangssequenz (S") durch einen beweglichen Parameter ($\underline{j}$) der Sequenz (S) des Normalmodus-Sequenzers, den oder die feststehenden Parameter ($\underline{u}$), einen beweglichen Parameter ($\underline{t}$) der Sequenz (S') des Ausnahmemodus-Sequenzers und eine Stufennummer bezeichnet wird.

8. Verfahren nach einem der Ansprüche 4 bis 7, **dadurch gekennzeichnet, dass** für etwa die Hälfte der isolierten Adsorber der Ausnahmemodus-Sequenzer ein Wartungsmodus-Steuerungssequenzer der Behandlungsanlage (10) ist.

9. Verfahren nach einem der vorhergehenden Ansprüche, **dadurch gekennzeichnet, dass** der erzeugte Sequenzer erhalten wird, indem er die parametrisierte Sequenz (S, S') so oft auf sich selbst in einer Schleife laufen lässt, wie der Zyklus Phasenzeiten aufweist, und während jeder Schleife die entsprechende Adsorptionseinheit (R1 bis R0) jedem Parameter angeglichen wird.

10. Verfahren nach Anspruch 9, **dadurch gekennzeichnet, dass** die entsprechende Adsorptionseinheit (R1 bis R0) mittels einer Entsprechungstabelle jedem Parameter ($\underline{a}$, $\underline{b}$, ..., $\underline{j}$; $\underline{k}$, $\underline{l}$, ..., $\underline{t}$, $\underline{u}$) angeglichen wird.

11. Anlage zur Behandlung eines Gases durch Adsorption, die einerseits N Adsorptionseinheiten (R1 bis R0) umfasst, wobei N größer oder gleich 2 ist, die gemäß einem Zyklus arbeiten, der gleichmäßig in höchstens N Phasenzeiten unterteilt ist und bei dem während eines Teils desselben mindestens eine der Adsorptionseinheiten (R1 bis R0) dem Abfluss von mindestens einer der anderen Adsorptionseinheiten ausgesetzt wird, wobei die N Adsorptionseinheiten (R1 bis R0) mit einer Leitung (1) zur Zuführung von zu behandelndem Gas, einer Leitung (2) zur Produktion von behandeltem Gas und einer Leitung (5) zum Sammeln eines Restgasstroms verbunden sind und mit Leitungen und Ventilen zum gleichzeitigen Verbinden der Adsorptionseinheiten miteinander und der Adsorptionseinheiten mit den Zufuhr-, Produktions- und Sammelleitungen ausgestattet sind; und andererseits eine Einheit (8) zur Steuerung der Anlage (10), die mindestens einen Steuerungssequenzer der Adsorptionseinheiten (R1 bis R0) definiert, der den zyklischen Betrieb der Anlage (10) sicherstellt, **dadurch gekennzeichnet, dass** mindestens ein Sequenzer der Steuereinheit (8) durch Anwendung des Steuerungsverfahrens nach einem der Ansprüche 1 bis 10 erhalten wird und zumindest bestimmte Verbindungsventile jeweils durch einen Parameter der parametrisierten Sequenz (S, S") bezeichnet werden, wodurch der mindestens eine Sequenzer der Steuereinheit (8) erzeugt wird.

12. Anlage nach Anspruch 11, **dadurch gekennzeichnet, dass** die Ventile, die durch einen Parameter der parametrisierten Sequenz (S, S') bezeichnet sind, in Ventilsätze entsprechend der Benutzung durch das Gas unterteilt werden, das die Ventile ein und desselben Satzes durchströmt, und dass jedes der durch einen Parameter bezeichneten Ventile ebenfalls durch die Nummer des Satzes bezeichnet wird, zu dem das entsprechende Ventil gehört.

**Claims**

1. Method of controlling a plant for processing a gas by adsorption, comprising N adsorption units (R1 to R0), N being greater than or equal to two, operating according to a cycle which is distributed uniformly into at most N phase times and during a part of which at least one of the adsorption units is subjected to the output flow of at least one of the other adsorption units, in which at least one control sequencer is used which determines the control steps of the N adsorption units (R1 to R0) over a cycle and which ensures, in a loop on itself, cyclic operation of the processing plant (10), and in which, on the basis of the control steps of the processing plant (10) which occur during a given phase time of a cycle of an operating mode of the plant, the said sequencer of the said operating mode is obtained by extrapolation to the other phase times of the cycle, **characterized in that**:

   - a mobile parameter ($\underline{a}$, $\underline{b}$, ..., $\underline{j}$) for identifying the operating state of the adsorption unit (R1 to R0) which is in each successive phase time of the cycle is firstly associated with the said phase time;
   - for the said given phase time, a parameterized sequence (S, S') of control steps of the processing plant (10) during the said given phase time is then defined, each adsorption unit (R1 to R0) controlled by the steps of the said sequence being denoted by the parameter ($\underline{a}$, $\underline{b}$, ..., $\underline{j}$) for identifying the operating state of the said adsorption unit; and
   - a control sequencer of the processing plant (10) is lastly generated by matching an adsorption unit (R1 to R0) with each mobile parameter ($\underline{a}$, $\underline{b}$, ..., $\underline{j}$) of the parameterized sequence during each phase time of the cycle, so as to cause the succession of phase times of the cycle to be followed at all the adsorption units in operation.

2. Method according to Claim 1, **characterized in that** a normal-mode control sequencer of the processing plant (10) is generated for N adsorption units in operation.

3. Method according to Claim 2, **characterized in that** each step of the parameterized sequence (S) of the normal-mode sequencer is denoted by a mobile parameter ($\underline{j}$) and a step number.

4. Method according to any one of the preceding claims, **characterized in that** for each adsorption unit (R3) temporarily isolated from the rest of the plant, a fixed parameter ($\underline{u}$) for identifying the isolated state of the said isolated unit (R3) is introduced before defining the parameterized sequence (S'), and **in that** when the control sequencer of the processing plant (10) is being generated, the or one of the isolated adsorption units (R3) is matched with the or each fixed parameter ($\underline{u}$) during all the phase times of the cycle, generating an exceptional-mode control sequencer of the processing plant (10).

5. Method according to Claim 4, **characterized in that** each step of the parameterized sequence (S') of the exceptional-mode sequencer is denoted by the fixed parameter or parameters ($\underline{u}$), a mobile parameter ($\underline{t}$) and a step number.

6. Method according to Claims 2 and 4 taken together, **characterized in that** at least one parameterized sequence (S") is provided for transition between the parameterized sequence (S) of the normal-mode sequencer and the parameterized sequence (S') of the exceptional-mode sequencer of the processing plant (10).

7. Method according to Claim 6, **characterized in that** each step of the parameterized position transition sequence (S") is denoted by a mobile parameter ($\underline{j}$) of the sequence (S) of the normal-mode sequencer, the fixed parameter or parameters ($\underline{u}$), a mobile parameter ($\underline{t}$) of the sequence (S') of the exceptional-mode sequencer and a reference number.

8. Method according to any one of Claims 4 to 7, **characterized in that** the exceptional-mode sequencer is a maintenance-mode control sequencer of the processing plant (10) for substantially half the isolated adsorbers.

9. Method according to any one of the preceding claims, **characterized in that** the generated sequencer is obtained by looping the parameterized sequence (S, S') on itself as many times as the cycle has phase times, and by matching the corresponding adsorption unit (R1 to R0) with each parameter during each loop.

10. Method according to Claim 9, **characterized in that** the corresponding adsorption unit (R1 to R0) is matched with

each parameter ($\underline{a}$, $\underline{b}$, ..., $\underline{j}$; $\underline{k}$, l, ..., $\underline{t}$, $\underline{u}$) by means of a correspondence table.

11. Plant for processing a gas by adsorption, having on the one hand N adsorption units (R1 to R0), N being greater than or equal to 2, which operate according to a cycle which is distributed uniformly into at most N phase times and during a part of which at least one of the adsorption units (R1 to R0) is subjected to the output flow of at least one of the other adsorption units, the said N adsorption units (R1 to R0) being connected to a pipe (1) for supplying gas to be processed, to a pipe (2) for producing processed gas, to a pipe (5) for collecting a residual gas flow, and being provided with pipes and valves both for connecting the adsorption units to one another and for connecting the adsorption units to the said supply, production and connection pipes; and on the other hand a unit (8) for controlling the plant (10), which defines at least one control sequencer of the adsorption units (R1 to R0), ensuring cyclic operation of the plant (10), in which at least one sequencer of the control unit (8) is obtained by applying the control method according to any one of Claims 1 to 10, and at least some of the connection valves are respectively denoted by a parameter of the parameterized sequence (S, S') generating the said at least one sequencer of the control unit (8).

12. Plant according to Claim 11, **characterized in that** the valves denoted by a parameter of the parameterized sequence (S, S') are distributed into sets of valves as a function of the use of the gas which passes through the valves of the same set, and **in that** each of the said valves denoted by a parameter is also denoted by the number of the set to which the corresponding valve belongs.

FIG.1

14

FIG.2

FIG.3I   FIG.3II   FIG.3III   FIG.3IV   FIG.3V

FIG.3VI   FIG.3VII   FIG.3VIII   FIG.3IX   FIG.3X

EP 1 336 910 B1

FIG.4

FIG.5

FIG.6

FIG.7

EP 1 336 910 B1